(19) Europäisches Patentamt
European Patent Office
Office européen des brevets

(11) **EP 2 558 602 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(21) Anmeldenummer: **11709697.4**

(22) Anmeldetag: **16.03.2011**

(51) Int Cl.:
*C21C 5/52* (2006.01)          *F27B 3/28* (2006.01)
*F27D 21/00* (2006.01)          *F27D 19/00* (2006.01)

(86) Internationale Anmeldenummer:
**PCT/EP2011/053988**

(87) Internationale Veröffentlichungsnummer:
**WO 2011/128170 (20.10.2011 Gazette 2011/42)**

(54) **VERFAHREN ZUR BESTIMMUNG EINES CHARGIERZEITPUNKTS ZUM CHARGIEREN, VON SCHMELZGUT IN EINEN LICHTBOGENOFEN, SIGNALVERARBEITUNGSEINRICHTUNG, MASCHINENLESBARER PROGRAMMCODE, SPEICHERMEDIUM UND LICHTBOGENOFEN**

METHOD FOR DETERMINING A TIME FOR CHARGING AN ELECTRIC ARC FURNACE WITH MATERIAL TO BE MELTED, SIGNAL PROCESSING DEVICE, MACHINE-READABLE PROGRAM CODE, STORAGE MEDIUM AND ELECTRIC ARC FURNACE

PROCÉDÉ DE DÉTERMINATION D'UN INSTANT DE CHARGEMENT, POUR LE CHARGEMENT DE MATIÈRE À FONDRE DANS UN FOUR À ARC, DISPOSITIF DE TRAITEMENT DE SIGNAL, CODE DE PROGRAMME LISIBLE PAR MACHINE, SUPPORT D'ENREGISTREMENT ET FOUR À ARC CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2010 DE 102010003845**

(43) Veröffentlichungstag der Anmeldung:
**20.02.2013 Patentblatt 2013/08**

(73) Patentinhaber: **Siemens Aktiengesellschaft
80333 München (DE)**

(72) Erfinder:
• **DITTMER, Björn**
  **90459 Nürnberg (DE)**
• **RIEGER, Detlef**
  **85598 Baldham (DE)**
• **DÖBBELER, Arno**
  **91074 Herzogenaurach (DE)**
• **KRÜGER, Klaus**
  **22179 Hamburg (DE)**
• **LEADBETTER, Sascha**
  **80796 München (DE)**
• **MATSCHULLAT, Thomas**
  **90542 Eckental (DE)**

(56) Entgegenhaltungen:
EP-A1- 1 985 952      WO-A1-2009/095396
DE-A1- 3 616 344

**Beschreibung**

Die Erfindung betrifft Verfahren zur Bestimmung eines Chargierzeitpunkts zum Chargieren, insbesondere Nach-Chargieren, von Schmelzgut, insbesondere Schrott, in einen Lichtbogenofen, wobei der Lichtbogenofen wenigstens eine Elektrode zum Erhitzen von innerhalb des Lichtbogenofens angeordnetem Schmelzgut mittels eines Lichtbogens umfasst. Ferner betrifft die Erfindung eine Signalverarbeitungseinrichtung, einen maschinenlesbaren Programmcode und einen Lichtbogenofen zur Durchführung des Verfahrens. Ferner betrifft die Erfindung ein Speichermedium auf welchem maschinenlesbarer Programmcode hinterlegt ist.

Bei der Herstellung von Stahl in einem Elektrolichtbogenofen wird Schrott eingeschmolzen. Dabei verringert sich im Verlauf des Schmelzprozesses das Volumen des Einsatzgutes um den Faktor fünf bis zehn (abhängig von der relativen Schüttdichte des Schrotts), sodass in der Regel ein bis zwei weitere Schrottkörbe in den Lichtbogenofen nachgefüllt werden, um ein ausreichendes Abstichgewicht an flüssigem Stahl zu erreichen.

Eine solche Herstellung wird in WO 2009/095396 offenbart.

Ein Problem ist es, dabei den optimalen Zeitpunkt für das Setzen bzw. Nachfüllen eines weiteren Korbes zu finden. Dieses Setzen eines neuen Korbes wird als Chargieren bezeichnet.

Der optimale Zeitpunkt für das Chargieren ist ein wichtiger Faktor um eine hohe Produktivität in der Stahlherstellung zu erzielen. Wird zu spät chargiert, so führt dies zu hohen Energieverlusten, einem erhöhtem Verschleiß und einer geringeren Produktivität. Der Schrott ist dann vollständig eingeschmolzen und die Lichtbögen brennen ohne Abschirmung auf dem flüssigen Stahlbad. In dieser Phase entsteht zudem kaum Schaumschlacke, die die Lichtbögen zusätzlich abschirmen könnte. Zum einen treten dadurch hohe Strahlungsverluste auf, da ein großer Teil der thermischen Strahlung in Abwärme übergeht. Dies ist energetisch ungünstig und verlängert die Power-on Zeit unnötig. Zum anderen können durch die thermische Strahlung der Lichtbögen Schlackenanbackungen an den Wänden abgeschmolzen werden, welches sich ungünstig auf den weiteren Prozessverlauf bezüglich der Energiebilanz und dem Verschleiß von Feuerfestmaterial auswirkt. Die Produktivität sinkt durch einen Schmelzprozess mit vergleichsweise geringem Wirkungsgrad. Außerdem entstehen beim Chargieren, insbesondere durch das schlagartige Eintauchen des herabfallenden Schrotts in den Flüssigstahlsumpf, große Emissionen aus Staub und CO (Kohlenstoffmonoxid).

Wird dagegen zu früh chargiert, so ist der Schrott im Lichtbogenofen noch nicht ausreichend eingeschmolzen und das verbleibende Leervolumen im Ofen ist nicht groß genug, um die nächste Schrottfüllung zu fassen. Denn prozessbedingt wird das zu chargierende Schrottvolumen in einem Vorgang komplett in das Gefäß eingebracht.

In letzterem Fall kann der Ofendeckel nicht geschlossen werden und der Bediener muss durch zusätzliches Drücken auf das Schrotthaufwerk im Gefäß versuchen, den Schrott mechanisch zu verdichten. Sollte dies nicht ausreichend sein, muss darüber hinaus der überschüssige Schrott entfernt werden, um das erforderliche Einschwenken des Ofendeckels zu ermöglichen. Dieses Vorgehen ist äußerst zeitaufwändig und senkt daher die Produktivität in erheblichem Maße. Die dadurch erhöhte Tap-to-Tap Zeit, d.h. die Zeit zwischen zwei Abstichen, kann den weiteren Ablauf der Prozesskette im Stahlwerk stören. Des Weiteren treten während der so entstandenen Nebenzeit Abwärmeverluste auf die sich weiter negativ auf den Energieverbrauch und die Produktivität auswirken.

In der Praxis wird daher versucht möglichst lange zu schmelzen, um sicher zu sein, dass der Schrott ausreichend niedergeschmolzen ist, und das Schrottvolumen des nachfolgende Korbes komplett in das Gefäß eingebracht werden kann - unter Inkaufnahme der oben beschriebenen Nachteile.

Da das Ofengefäß geschlossen ist und auch eine Sicht durch das Ofentor keine klare Aussage über ein komplettes Einschmelzen erlaubt, hat der Bediener nur bedingt die Möglichkeit einen geeigneten Zeitpunkt für das Chargieren zu bestimmen.

Um eine optimale Prozessführung zu erreichen sollte so früh wie möglich chargiert werden um unnötige Energieverluste zu vermeiden. Es muss jedoch sicher gestellt werden, dass der Schrott im Ofengefäß so weit eingeschmolzen wurde, dass der nächste Schrottkorb vollständig in das Ofengefäß passt.

Weiterhin ist ein frühzeitiges Chargieren sinnvoll, um den Wirkungsgrad der im Ofen installierten Brenner, die dem zusätzlichen Aufheizen des Schrottes dienen, möglichst hoch zu halten. Taucht der chargierte Schrott bei zu später Chargierung zu stark im Flüssigstahlsumpf ein, so unterkühlt die Schmelze und es fehlt ein Teil des Schrottgerüstes oberhalb der Schmelze, um durch die Brenner optimal aufgeheizt zu werden.

Das oben beschriebene Chargierverhalten aus der bisherigen Praxis führt zu erhöhten Wärmeverlusten, erhöhtem Verschleiß der Wandelemente bzw. Verbrauch an Feuerfestmaterial, höherem Elektrodenverbrauch, erhöhten Emissionen, längerer Power-on und Tap-to-Tap Zeit sowie zu geringerer Produktivität.

Bisher wird häufig auf die Kompetenz und Erfahrung des Bedienpersonals für den Lichtbogenofen zurückgegriffen, um einen Chargierzeitpunkt zu bestimmen. Es gibt für den Bediener verschiedene Anzeichen für das Erreichen des Chargierzeitpunktes. Zum Beispiel sinkt der Schalldruckpegel des durch die Lichtbögen entstehenden Schalls. Ein weiteres Indiz ist der visuelle Eindruck des Schmelzfortschrittes durch einen Blick durch das Ofentor, das dazu geöffnet werden muss.

Des Weiteren könnten optische Messverfahren den Operator bei der Wahl des Chargierzeitpunktes unterstützen, beispielsweise innerhalb eines Brenners untergebrachte optische Sensoren, vgl. Nyssen, P. et al.: Innovative visualisation technique at the electric arc furnace, Revue de Metallurgie (103) 2006, Nr. 9, S. 369-373.

Neben diesen "weichen" Faktoren die in erheblichem Maße von der Erfahrung des Bedienpersonals abhängen, gibt es auch berechnete Faktoren zur Bestimmung eines Chargierzeitpunktes.

So ist bspw. bekannt, aus einem thermischen Modell unter Kenntnis des chargierten Schrottgewichtes, der eingebrachten Energie und anderer Größen den zu erwartenden Temperaturverlauf zu berechnen und daraus einen möglichen Chargierhinweis zu erhalten, vgl. Köhle, S.: Rechnereinsatz zur Steuerung von Lichtbogenöfen. Stahl u. Eisen (100) 1980, Nr. 10, S. 522-528.

Zumeist werden diese Verfahren zur Unterstützung des Ofenbedieners eingesetzt. Einige Modelle versuchen darauf aufbauend den Prozessfortschritt für verschiedene Bereiche des Ofengefäßes zu visualisieren, vgl. Nyssen, P.; Colin, R.; Junque, J.-L.; Knoops, S.: Application of a dynamic metallurgical model tot he alectric arc furnace. Revue de Metallurgie (101) 2004, Nr. 4, 317-326. Dabei ist jedoch zu beachten, dass es sich hierbei um Modelle ohne direkte Messung des tatsächlichen Prozessfortschritts handelt.

Im einfachsten, durchaus gebräuchlichen Fall wird nach einem festen Fahrdiagramm chargiert. Auf Basis von Erfahrungswerten wird so der Zeitpunkt des Chargierens anhand des zuvor chargierten Schrottgewichtes und der eingebrachten Energie festgelegt.

Bereits durchgeführte Körperschallmessungen an vollständig ausgemauerten Lichtbogenöfen führten in diesem Zusammenhang zu keinem verwertbaren Ergebnis und wurden daher nicht weiter verfolgt, vgl. Higgs, R.W.: Sonic Signature Analysis for Arc Furnace Diagnostics and Control. Proceedings IEEE Ultrasonics Symposium 1974.

Nachteil all dieser Verfahren ist es, dass diese den Chargierzeitpunkt nicht hinreichend genau bestimmen können, um den Lichtbogenofen in effizienter Weise, d.h. insbesondere zum optimalen Zeitpunkt, zu chargieren bzw. nachzuchargieren.

Aufgabe der vorliegenden Erfindung ist es, einen zustandsorientierten Chargierzeitpunkt für den Betrieb eines Lichtbogenofens zu bestimmen und entsprechende Vorrichtungen bereitzustellen, um Energieeinsatz, Ressourceneinsatz und Produktionszeit für einen Produktionszyklus zur Erreichung eines Abstichgewichts zu verringern.

Die Aufgabe wird gelöst durch ein Verfahren zur Bestimmung eines Chargierzeitpunkts zum Chargieren, insbesondere Nach-Chargieren, von Schmelzgut, insbesondere Schrott, in einen Lichtbogenofen, wobei der Lichtbogenofen wenigstens eine Elektrode zum Erhitzen von innerhalb des Lichtbogenofens angeordnetem Schmelzgut mittels eines Lichtbogens umfasst, wobei ein erstes Signal zur Bestimmung eines Phasenzustands eines schmelzgutseitigen Lichtbogenfußpunkts anhand eines erfassten Elektrodenstroms ermittelt wird, wobei geprüft wird, ob das erste Signal einen vorgegebenen Schwellwert für eine vorgegebene Mindestzeitdauer überschreitet, wobei der Chargierzeitpunkt frühestens dann erreicht ist, wenn das erste Signal den Schwellwert für die vorgegebene Mindestzeitdauer überschreitet.

Dadurch, dass dieses Verfahren von einem aktuellen Zustand im Lichtbogenofen ausgeht, bietet dies enorme Vorteile gegenüber den Verfahren zur Bestimmung von Chargierzeitpunkten gemäß Stand der Technik. Die Chargierung erfolgt stets zu einem möglichst optimalen Zeitpunkt, d.h. es werden zusätzliche Power-on-Zeiten vermieden. Andererseits wird aber so spät chargiert, dass sichergestellt ist, dass das zu chargierende Schmelzgut vollständig in den Lichtbogenofen eingebracht werden kann, wodurch die Produktionszeiten für eine Schmelze möglichst gering gehalten werden.

Unter Schmelzgut wird das feste oder flüssige Metall verstanden, welches zum Herstellen des Metallbads, insbesondere Stahlbads, vorgesehen ist. Häufig ist in den Lichtbogenofen zu chargierendes Schmelzgut Schrott.

Die Verwendung des Begriffs erstes Signal und zweites Signal, siehe Ausführungen unten, dienen lediglich der Unterscheidbarkeit der Signale für den Leser. Darüber hinaus kommt der Bezeichnung "erstes" bzw. "zweites" Signal keine Relevanz zu.

In einer vorteilhaften Ausführungsform wird für die Ermittlung des ersten Signals eine S-Funktion verwendet. Diese ist auch unter dem Namen Logistikfunktion bekannt. Es hat sich gezeigt, dass die Verwendung der S-Funktion besonders gute Ergebnisse liefert.

Ferner ist es von Vorteil, zur Ermittlung des ersten Signals für die S-Funktion ein Verhältnis aus Elektrodenstrombeiträgen bei einem ganzzahligen Vielfachen des Doppelten einer Netzbetriebsfrequenz und Elektrodenstrombeiträgen heranzuziehen, welche zwischen ganzzahligen Vielfachen des Doppelten der Netzbetriebsfrequenz vorliegen. Die Netzbetriebsfrequenz ist die Frequenz mit welcher ein Versorgungsnetz den Lichtbogenofen versorgt. Vorzugsweise werden die Elektrodenstrombeiträge auf Basis des quadrierten Elektrodenstromsignals ermittelt, da diese ein besseres Maß für die Leistung sind und empfindlicher für den vorgesehenen Zweck reagieren.

Weitere Informationen zur Ermittlung des ersten Signals ergeben sich aus der Figurenbeschreibung.

Die Aufgabe wird ebenfalls gelöst durch ein Verfahren zur Bestimmung eines Chargierzeitpunkts zum Chargieren, insbesondere Nach-Chargieren, von Schmelzgut, insbesondere Schrott, in einen Lichtbogenofen, wobei der Lichtbogenofen wenigstens eine Elektrode zum Erhitzen von innerhalb des Lichtbogenofens angeordnetem Schmelzgut mittels eines Lichtbogens umfasst, wobei ein zweites Signal zur Bestimmung eines an einer Begrenzung, insbesondere Ofenwand, des Lichtbogenofens festgesetzten feststoffförmigen Schmelzgutteils mittels erfasster Körperschallwellen ermittelt wird, wobei geprüft wird, ob das zweite Signal einen vorgegebenen Schwellwert für eine vorgegebene Mindestzeitdauer überschreitet, wobei der Chargierzeitpunkt frühestens dann erreicht ist, wenn das zweite Signal den Schwellwert für die vorgegebene Mindestzeitdauer überschreitet.

Es handelt sich um ein alternatives, gleichwertiges Verfahren, welches es ebenfalls erlaubt, die Nachteile aus dem Stand der Technik deutlich zu verringern bzw. zu beseitigen.

Vorzugsweise wird zur Ermittlung des zweiten Signals ein Signal-Rausch-Verhältnis aus Körperschallsignalanteilen diskreter Frequenzen und aus Körperschallsignalanteilen für in einem vorgegebenen Intervall von der jeweiligen diskreten Frequenz abweichende Frequenzen gebildet.

Ferner ist es vorteilhaft zur Ermittlung des zweiten Signals zusätzlich ein Elektrodenstromsignalanteil bei einer Netzbetriebsfrequenz des Lichtbogenofens, insbesondere 50Hz oder 60Hz, heranzuziehen.

Vorteilhafterweise wird dies genutzt, um das zweite Signal anhand der Gleichung:

$$SK = c*(SNR - d)*(GG - 0,9)$$

zu bestimmen, wobei

SNR: das Signal-Rauschverhältnis,
GG: der Elektrodenstromsignalanteil bei der Netzbetriebsfrequenz
c: ein Verstärkungsfaktor, und
d: ein Offset-Wert ist.

Der Verstärkungsfaktor c wird vorzugsweise derart gewählt, dass das Signal gegen eins geht, sobald die Flachbadphase erreicht wird.

Die Aufgabe wird ebenfalls gelöst durch ein Verfahren zur Bestimmung eines Chargierzeitpunkts zum Chargieren, insbesondere Nach-Chargieren, von Schmelzgut, insbesondere Schrott, in einen Lichtbogenofen, wobei der Lichtbogenofen wenigstens eine Elektrode zum Erhitzen von innerhalb des Lichtbogenofens angeordnetem Schmelzgut mittels eines Lichtbogens umfasst, wobei ein erstes Signal zur Bestimmung eines Phasenzustands eines schmelzgutseitigen Lichtbogenfußpunkts anhand eines erfassten Elektrodenstroms ermittelt wird, wobei ein zweites Signal zur Bestimmung eines an einer Begrenzung, insbesondere Ofenwand, des Lichtbogenofens festgesetzten feststoffförmigen Schmelzgutteils mittels erfasster Körperschallwellen ermittelt wird, wobei der Chargierzeitpunkt unter Verwendung des ersten und des zweiten Signals ermittelt wird.

Durch die kombinierte Verwendung des ersten und zweiten Signals kann die Sicherheit, einen möglichst prozessoptimalen Chargierzeitpunkt zu bestimmen, weiter erhöht werden. In diesem Fall sind die Nachteile des Stands der Technik minimiert.

In einer vorteilhaften Ausführungsform wird das erste Signal und das zweite Signal gemittelt, wobei geprüft wird, ob das gemittelte Signal einen vorgebbaren Schwellwert für eine vorgegebene Mindestzeitdauer überschreitet, wobei der Chargierzeitpunkt frühestens dann erreicht ist, wenn das gemittelte Signal für eine vorgegebene Mindestdauer über dem Schwellwert liegt.

Die Ermittlung eines gemittelten Signals aus dem ersten und dem zweiten Signal stellt eine einfache und praktikable Kombination der Signale dar, mittels derer die erfindungsgemäßen Vorteile realisiert werden können. Zur Mittelung können bekannte Verfahren wie arithmetische Mittlung oder geometrische Mittelung herangezogen werden.

Alternativ kann vorteilhaft auch derart vorgegangen werden, dass geprüft wird, ob das erste Signal einen vorgegebenen Schwellwert für eine vorgegebene Mindestzeitdauer überschreitet, dass geprüft wird, ob das zweite Signal einen vorgegebenen Schwellwert für eine vorgegebene Mindestzeitdauer überschreitet, wobei der Chargierzeitpunkt frühestens dann erreicht ist, wenn das erste und das zweite Signal gleichzeitig jeweils für eine vorgegebene Mindestdauer über dem jeweils zugehörigen Schwellwert liegen.

Die gekoppelte Betrachtung des ersten und zweiten Signals im Hinblick auf die Erfüllung der jeweiligen Prüfkritieren ist ebenfalls ein gut funktionierendes Vorgehen, um einen möglichst prozessoptimalen Chargierzeitpunkt sicher zu bestimmen.

In einer vorteilhaften Ausgestaltung der Erfindung umfasst der Lichtbogenofen mehr als eine Elektrode, insbesondere drei Elektroden, und/oder mehr als einen Körperschallsensor, insbesondere drei Körperschallsensoren, wobei der Chargierzeitpunkt gemäß einem der Ansprüche 1 bis 9 unter Berücksichtigung der erfassten Elektrodenströme aller Elektroden und/oder unter Berücksichtigung der erfassten Körperschallschwingungen aller Körperschallsensoren bestimmt wird.

Durch die Berücksichtigung der Elektrodenströme aller vom Lichtbogenofen umfassten Elektroden und/oder der Signale aller vom Lichtbogenofen umfassten Körperschallsensoren wird sichergestellt, dass ein Chargierzeitpunkt erst dann als vorliegend angesehen wird, wenn der gewünschte Zustand im Lichtbogenofen auch erreicht ist. Dadurch wird sichergestellt, dass ein ungleichmäßiges Einschmelzen des Schrotts für die Elektroden nicht zu einem verfrühten Chargierzeitpunkt führt, so dass etwa der nachzufüllende Schrott nicht in den Ofen passt.

Allen oben aufgeführten Verfahren ist gemeinsam, dass diese zur Bestimmung eines prozessoptimalen Chargierzeitpunkts für einen laufenden Lichtbogenofenprozess auf erfasste Daten aus diesem aktuell laufenden Lichtbogenofenprozess zurückgreifen. Dadurch wird es möglich, dass der Zustand des Schmelzguts im Lichtbogenofen online nachvollziehbar ist und dementsprechend ein Chargierzeitpunkt abhängig von diesem Zustand des Schmelzguts im Lichtbogenofen ermittelt werden kann. Durch die Verwendung von Signalen, welche mit dem Zustand des Schmelzguts korrelieren, kann somit der Prozessfortschritt relativ genau in Echtzeit verfolgt werden, wodurch es ermöglicht wird, einen Chargierzeitpunkt möglichst prozessoptimal zu bestimmen.

Die Aufgabe wird auch gelöst durch eine Signalverarbeitungseinrichtung für einen Lichtbogenofen, mit einem maschinenlesbaren Programmcode, welcher Steuerbefehle aufweist, die die Signalverarbeitungseinrichtung zur Durchführung eines Verfahrens nach einem der Ansprüche 1 bis 10 veranlassen.

Ferner wird die Aufgabe gelöst von einem maschinenlesbaren Programmcode für eine Signalverarbeitungseinrichtung für einen Lichtbogenofen, wobei der Programmcode Steuerbefehle aufweist, die die Signalverarbeitungseinrichtung zur Durchführung des Verfahrens nach einem der Ansprüche 1 bis 10 veranlassen.

Darüber hinaus erstreckt sich die Erfindung auch auf ein Speichermedium mit einem darauf gespeicherten maschinenlesbaren Programmcode gemäß Anspruch 12.

Vorrichtungsmäßig wird die Aufgabe gelöst durch einen Lichtbogenofen mit wenigstens einer Elektrode, mit einer Elektrodenstromerfassungseinrichtung zur Erfassung eines der wenigstens einen Elektrode zugeführten Elektrodenstroms, mit wenigstens einem Körperschallsensor zur Erfassung von Körperschall-Schwingungen einer Begrenzung des Lichtbogenofens, und mit einer Signalverarbeitungseinrichtung nach Anspruch 11, wobei die Elektrodenstromerfassungseinrichtung und die Körperschallsensoren mit der Signalverarbeitungseinrichtung wirkverbunden sind.

Ein derart ausgebildeter Lichtbogenofen kann mit dem erfindungsgemäßen Verfahren betrieben werden, wodurch die erfindungsgemäßen Vorteile realisiert werden können.

Vorzugsweise ist die Signalverarbeitungseinrichtung zusätzlich mit einer Steuer- und/oder Regelungseinrichtung verbunden, welche mit einer Chargiereinrichtung wirkverbunden ist, wobei die Chargierung von Schmelzgut mittels der Steuer- und/oder Regeleinrichtung steuerbar und/oder regelbar ist. Hierdurch ist eine Vollautomatisierung möglich. Diese ist jedoch nicht zwingend. Der bestimmte Chargierzeitpunkt kann auch dem Bedienpersonal mitgeteilt, z.B. angezeigt, werden, so dass diese die Chargierung manuell einleiten. Die Signalverarbeitungseinrichtung kann mit der Steuer- und/oder Regeleinrichtung baulich identisch sein. Alternativ können diese auch als unterschiedliche, räumlich getrennte Einheiten ausgestaltet werden.

Weitere Vorteile der Erfindung ergeben sich aus Ausführungsbeispielen, welche anhand der schematischen Zeichnungen genauer erläutert werden. Es zeigen:

FIG 1      eine schematische Darstellung eines Lichtbogenofens

FIG 2      ein Ablaufdiagramm für ein Verfahren zur Bestimmung des Chargierzeitpunkts unter Verwendung von Elektrodenströmen,

FIG 3      ein Ablaufdiagramm für ein Verfahren zur Bestimmung des Chargierzeitpunkts unter Verwendung von Körperschallwellen

FIG 4      ein Ablaufdiagramm für ein Verfahren zur Bestimmung des Chargierzeitpunkts unter Verwendung von Elektrodenströmen und unter Verwendung von Körperschallsignalen.

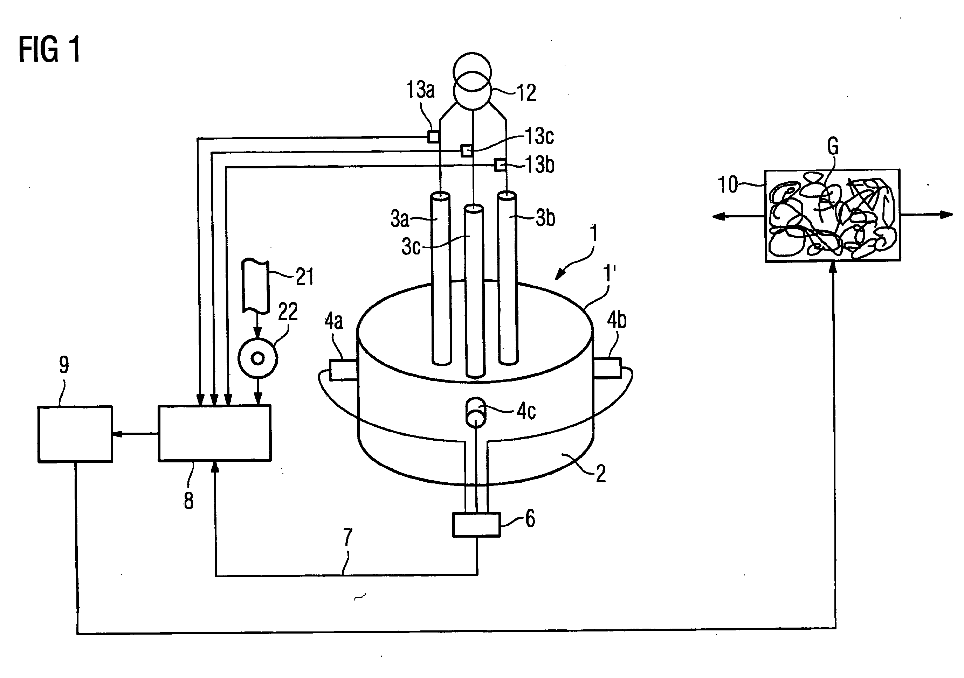

FIG 1 zeigt einen schematisch dargestellten Lichtbogenofen 1, insbesondere Dreh-Strom-Elektrolichtbogenofen. Bei der Herstellung von Metallschmelzen, insbesondere Stahlbädern, ist es erforderlich, mehrfach Schmelzgut G in den Lichtbogenofen 1, insbesondere in ein vom Lichtbogenofen umfasstes Ofengefäß 1' einzubringen, um ein gewünschtes Abstichgewicht für das im Ofen bei Ende des Schmelzprozesses vorliegende Flüssigmetall zu erreichen. Häufig ist es, dass hierzu zweimal Schrott in den Lichtbogenofen 1 nachgefüllt wird. Jedoch können auch mehr oder weniger als zwei Nachfüllungen erforderlich sein. Dies hängt u.a. vom Lichtbogenofen 1 und dessen Fassungsvermögen ab.

Bei drei erforderlichen Schrott-Chargen zum Erreichen des Abstichgewichts wird also zunächst mit einer ersten Ladung bzw. einer ersten Charge Schrott der Aufschmelzprozess begonnen.

Diese wird weitestgehend oder vollständig eingeschmolzen. Sodann wird die zweite Charge Schrott in den Ofen 1 eingebracht und geschmolzen. Anschließend wird die dritte Ladung Schrott in den Ofen 1 eingebracht. Auch diese wird aufgeschmolzen und das Flüssigmetallbad wird für den Abstich vorbereitet.

Für das Nach-Chargieren, d.h. für die obige zweite und dritte Schrottladung, ist es erforderlich, die Elektroden 3a, 3b, 3c aus dem Lichtbogenofen 1 auszubringen. In der Regel wird hierzu auch der Deckel des Ofens 1 geöffnet. Daher sind die Elektroden 3a, 3b, 3c zumindest höhenverstellbar und häufig auch schwenkbar gelagert.

Im vorliegenden Fall umfasst der Elektrolichtbogenofen 1 drei Elektroden 3a, 3b, 3c. Die Elektrodenströme der jeweiligen Elektrode 3a, 3b, 3c werden jeweils mit entsprechender Erfassungseinrichtung 13a, 13b bzw. 13c erfasst. Die Elektroden 3a, 3b, 3c sind über Stromzuführungen mit einer Stromversorgungseinrichtung 12 gekoppelt. Die Stromversorgungseinrichtung 12 weist vorzugsweise einen Ofentransformator auf.

Ferner weist der Lichtbogenofen 1 drei Körperschallsensoren 4a, 4b, 4c auf, welche vorzugsweise an schwingungsfähigen Ofenwänden 2 angeordnet sind. Vorzugsweise sind die Körperschallsensoren 4a, 4b, 4c an der einer Elektrode 3a, 3b, 3c nächsten gegenüberliegenden Ofenwand 2 bzw. Ofenpaneel angeordnet.

Ferner umfasst der Lichtbogenofen 1 eine Signalverarbeitungseinrichtung 8, welcher die Signale der Elektrodenstromerfassungseinrichtungen 13a, 13b, 13c und die Signale der Körperschallsensoren 4a, 4b, 4c zuführbar sind.

Auf der Signalverarbeitungseinrichtung 8 ist ein maschinenlesbarer Programmcode 21 hinterlegt. Dieser maschinenlesbare Programmcode 21 weist Steuerbefehle auf, die Signalverarbeitungseinrichtung 8 zur Durchführung einer Ausführungsform der erfindungsgemäßen Verfahren veranlasst, wenn diese ausgeführt werden.

Der maschinenlesbare Programmcode 21 kann auf der Signalverarbeitungseinrichtung 8 mittels eines Speichermediums 22 hinterlegt werden, z.B. mittels eines USB-Sticks, CD, DVD oder anderer Datenträger. Auch kann dieser permanent auf der Signalverarbeitungseinrichtung 8 hinterlegt sein. Die Bereitstellung des Programmcodes 21 kann auch über ein Netzwerk erfolgen.

Die Signalverarbeitungseinrichtung 8 ist somit derart ausgebildet, dass ein Chargierzeitpunkt ermittelt werden kann.

Vorzugsweise steht die Signalverarbeitungseinrichtung 8 mit einer Steuer- und/oder Regeleinrichtung 9 in Wirkverbindung, so dass mittels dieser bei Erreichen des Chargierzeitpunkts ein Chargiervorgang, vorzugsweise vollautomatisch, ausgelöst bzw. durchgeführt werden kann. Dazu ist die Steuer- und/oder Regeleinrichtung 9 mit einer Chargiereinrichtung 10, z.B. einem verfahrbaren Schrottkorb, wirkverbunden.

Die Steuer- und/oder Regeleinrichtung 9 kann darüber hinaus zum Steuern und/oder Regeln weiterer Funktionen des Lichtbogenofens 1 verwendet werden, bspw. zur Elektrodenregelung oder ähnlichem. Dies ist in FIG 1 aus Gründen der Übersichtlichkeit nicht gezeigt.

Wird der Chargierzeitpunkt ohne Verwendung von Körperschallsignalen bestimmt, insbesondere nur mittels der Elektrodenströme, so kann auf die Installation der Körperschallsensoren 4a, 4b, 4c am Lichtbogenofen 1 zum Zweck der Bestimmung des Chargierzeitpunkts auch verzichtet werden.

Allerdings können die Körperschallsensoren 4a, 4b, 4c auch für andere Verfahren vorteilhaft eingesetzt werden, vgl. bspw. WO 2009095292 A1, WO 2007009924 A1 oder WO 2009095396 A1.

Die Körperschallsensoren 4a, 4b, 4c sind vorzugsweise mit einer Einrichtung 6 zur Verstärkung und/oder Umsetzung von Körperschallsignalen von elektrischen Signalen in optische Signale wirkverbunden. Die optischen Signale werden von der Einrichtung 6 mittels eines Lichtwellenleiters 7 an die Signalverarbeitungseinrichtung 8 übertragen. Aufgrund der rauen Umgebungsbedingungen ist eine Überführung von elektrischen Signalen in optische Signale praktikabel.

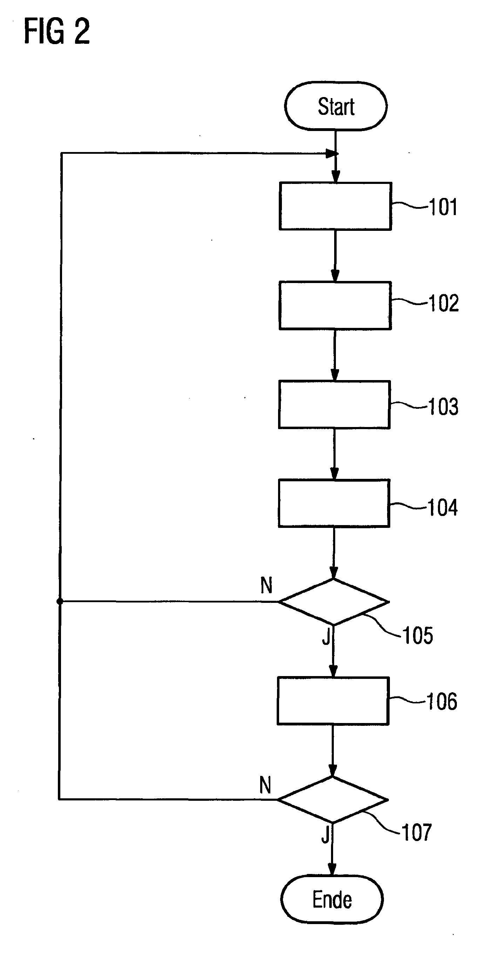

Im Nachfolgenden wird anhand FIG 2 erläutert, wie ein Chargiersignal auf Basis von Elektrodenströmen ermittelt werden kann.

Bei dem Ablaufdiagramm wird davon ausgegangen, dass die Erstbefüllung des Lichtbogenofens mit Schrott erfolgt ist und nun ein Einschmelzen der ersten Charge erfolgt.

Hierzu werden in einem Verfahrensschritt 101 die Elektrodenströme der jeweiligen Elektrode erfasst. Diese werden der Steuer- und/oder Regeleinrichtung zugeführt und dort weiterverarbeitet.

In einem Verfahrensschritt 102 werden die Elektrodenströme vom Zeitbereich in den Frequenzbereich überführt, z.B. mittels Fast Fouriertransformation, nachfolgend FFT abgekürzt. Die Verwendung der FFT hat sich als praktikabel herausgestellt.

Durch den Fachmann können jedoch auch andere Transformationsalgorithmen verwendet werden, welche eine Überführung des Elektrodenstromsignals von einem Zeitbereich in einen Frequenzbereich ermöglichen.

Mittels der Fouriertransformation können die frequenzspezifischen Beiträge bzw. Beträge für den Elektrodenstrom ermittelt werden. Diese Beträge werden für bestimmte Frequenzbereiche der frequenzabhängigen Ströme für einen jeweiligen Frequenzbereich und für die drei Elektroden aufsummiert.

Die Summe der spektralen Anteile S1 des quadrierten Stroms I zwischen den Harmonischen bei 100 Hz und 200Hz, zwischen 200Hz und 300Hz, zwischen 300 Hz und 400 Hz bzw. zwischen 400 Hz und 500 Hz für die drei Elektroden k errechnet sich aus

$$S1 = \sum_{k=1}^{3}\left(\sum_{j=1}^{4}\left(\sum_{i=100j+x}^{100(j+1)-x}|FFT(I_k^2)_i|\right)\right)$$

mit Index k für die Elektrode, einem Abstandswert x, welcher bspw 3 bis 6 Hz beträgt, um einen genügend weiten Abstand von den Harmonischen j bereitzustellen und $|FFT(I_k^2)|$ für den Betrag der Fouriertransformation bei i Hz des entsprechenden quadrierte Elektrodenstromsignals $I_k^2$ der Elektrode k.

Dies entspricht dem Stromanteil, welcher abseits der Grundschwingungen und der harmonischen Oberschwingungen zum Elektrodenstromsignal beigetragen wird.

Ferner wird der spektrale Anteil S2 für die Oberschwingungen der doppelten Netzbetriebsfrequenz des Ofens ermittelt, welcher durch Stromanteile bei und in der nahen Umgebung von 200 Hz, 300 Hz, 400 Hz und 500 Hz geliefert wird. Dies erfolgt gemäß:

$$S2 = \sum_{k=1}^{3}\left(\sum_{i=2}^{5}|FFT(I_k^2)_{100i}|\right)$$

Dieser Vorgehensweise liegt die Beobachtung und die Erkenntnis der Erfinder zugrunde, dass die Anharmonizität des Elektrodenstroms beim Übergang von Brennen auf Schrott, nachfolgend genannt Schrottphase, auf das Brennen auf Flüssigmetall, nachfolgend genannt Flüssigbadphase, stark abnimmt. D.h. in der Schrottphase sind neben der Grundharmonischen bei 100 Hz (für eine Netzbetriebsfrequenz von 50 Hz) und deren Oberschwingungen bei 200 Hz, 300 Hz usw. in erheblichem Maße spektrale Anteile zwischen diesen Harmonischen sichtbar. In der Flachbadphase gehen diese Anteile stark zurück, so dass nahezu nur die erste Harmonische und deren Vielfache vorhanden sind. Das Maß S für die Abschmelzung des Schrotts im Bereich der Elektroden kann daher vorteilhaft mittels dieser Erkenntnis bestimmt werden.

Bei einer anderen Netzbetriebsfrequenz, z.B. bei 60 Hz wäre die Grundharmonische 120 Hz und die harmonischen Oberschwingungen ein entsprechendes ganzzahliges Vielfach hiervon. Dies kann bspw. in außereuropäischen Ländern Anwendung finden, z.B. in den USA.

In einem Verfahrensschritt 103 wird nun aus den ermittelten Signalen ein Quotient gebildet. Bildet man bspw. das Verhältnis S1/S2 und multipliziert dieses mit einem Empfindlichkeitsfaktor a (abhängig vom Lichtbogenofen und dessen elektrischer Auslegung in der Größe von $\approx$ 2) und begrenzt diesen Wert auf eins, erhält man ein Maß y zur weiteren Berechnung

$$y = \min\left(1, a \cdot \frac{S2}{S1}\right).$$

In einem Verfahrensschritt 104 wird y nun in eine sogenannte S-Funktion eingesetzt, und dadurch, das erste Signal S für die Bestimmung der Schrotteinschmelzung erhalten:

$$S = y - \left(\frac{1}{2\pi}\right) \cdot \sin\left(2\pi * y\right).$$

Das erste Signal S ist nahe null während der Schrottphase und ändert sich zu einem Wert gegen eins in der Flüssigbadphase. Dieses Signal bildet das erste Kriterium für ein auszugebendes Chargiersignal, da dieses sehr empfindlich auf das Einschmelzverhalten des Schrotts im Bereich der Elektroden reagiert.

In einem Verfahrensschritt 105 wird geprüft, ob das erste Signal S für eine vorgegebene Zeitdauer oberhalb eines vorgegebenen Schwellwerts liegt. Als vorgegebene Zeitdauer, innerhalb derer der Schwellwert überschritten sein muss, können bspw. 10 bis 40 Sekunden, insbesondere 20 Sekunden, gewählt werden. Der Schwellwert selbst wird - wenn das erste Signal bei vollständiger Einschmelzung bei ca. 1 liegt - bspw. in einem Bereich von 0,6 bis 0,8, insbesondere 0,7, gewählt.

Sobald der Verfahrensschritt 105 ergibt, dass der Schwellwert für wenigstens 20 Sekunden überschritten ist, wird in einem Verfahrensschritt 106 ein Chargiersignal ausgegeben, d.h. dass nun erneut Schrott in den Lichtbogenofen eingebracht werden kann.

Das ausgegebene Chargiersignal kann sowohl eine vollautomatische Chargierung des Lichtbogens initiieren, als auch das Bedienpersonal über das Vorliegen eines optimalen Chargierzeitpunkts informieren, bspw. über eine visuelle Anzeige und/oder mittels akustischer Mittel.

Solange die Prüfung ergibt, dass der Schwellwert nicht für die vorgegebene Mindestdauer überschritten ist, werden die Elektrodenströme weiterhin gemäß obiger Art und Weise analysiert.

In einem Verfahrensschritt 107 wird geprüft, ob das Verfahren weiter, insbesondere nach Chargierung der nächsten Ladung Schmelzgut, ausgeführt werden soll. Insbesondere bei drei erforderlichen Chargen zur Erreichung des Abstichgewichts, ist es bspw. nicht mehr erforderlich, das Verfahren nach Chargieren der dritten Schrottladung weiterlaufen zu lassen, da nach Zugabe der dritten Charge in den Lichtbogenofen keine weitere Chargierung mehr erfolgt. Vielmehr erfolgt als nächstes - nach Vorliegen einer gewünschten Schmelze - ein Abstich des Flüssigmetalls. Insofern ist eine weitere Bestimmung eines Chargierzeitpunkts ggf. überflüssig.

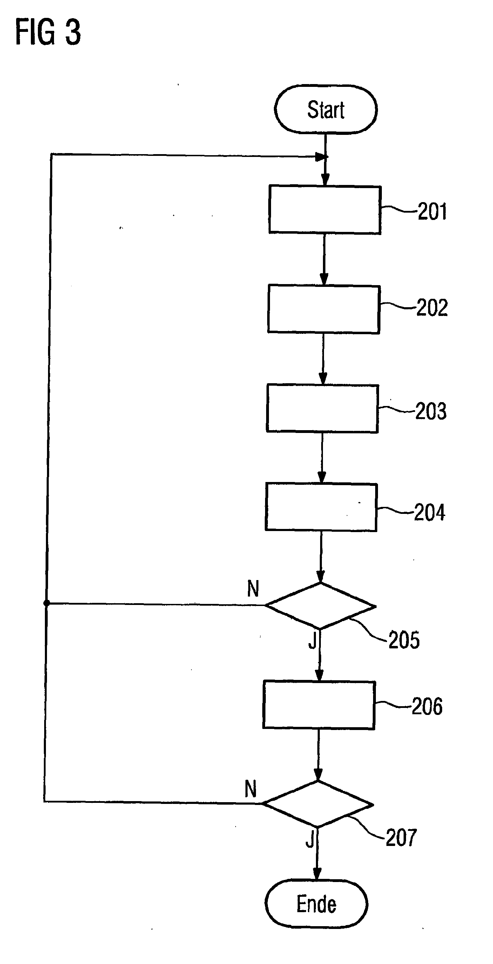

FIG 3 zeigt eine alternative Ausführungsform zur Bestimmung des Chargierzeitpunkts für einen Lichtbogenofen. Dieses Verfahren geht von den gleichen Startbedingungen aus. Die Erstbefüllung des Lichtbogenofens mit Schrott liegt vor und der Ofen ist in Betrieb zwecks Einschmelzen dieses Schrotts.

In einem Verfahrensschritt 201 werden Körperschallsignale mit vorhandenen Körperschallsensoren erfasst. Die vom Körperschallsensor s erfassten Signale werden mit $Ks_s$ bezeichnet, wobei der Index s ein Zählindex ist und im vorliegenden Beispiel von 1 bis 3 läuft, da drei Körperschallsensoren vom Lichtbogenofen umfasst sind.

Die Verwendung des zweiten Signals auf Basis von Körperschallsignalen basiert auf der Beobachtung, dass sich die Körperschallschwingungen der Ofenbegrenzung, insbesondere des Ofenpanels, beim Übergang in die Flachbadphase auf Harmonische, d.h. ganzzahlige Vielfache, der zweifachen Netzfrequenz konzentrieren. Bei 50 Hz Netzbetriebsfrequenz treten daher im Wesentlichen die Frequenzen 100 Hz, 200 Hz, 300 Hz usw. auf. In der Schrotteinschmelzphase verteilt sich die Leistung im Frequenzspektrum des Körperschalls vergleichsweise gleichmäßig über einen größeren Frequenzbereich.

Das zweite Signal $SK_s$, welches für die Bestimmung des Chargierzeitpunkts ermittelt wird und mit der Abschmelzung des Schrotts an den Ofenwänden in Verbindung gebracht werden kann, kann daher vorteilhaft mittels eines Signal-Rausch-Verhältnisses bestimmt werden. Dies erfolgt in einem Verfahrensschritt 202.

Hierzu erfolgt zunächst eine Berechnung des Rauschniveaus $SN_j$ der Harmonischen j der doppelten Netzbetriebsfrequenz mit bspw. j = 1, 2, ... 6, d.h. Frequenzen von 100 Hz , 200 Hz, ... 600 Hz.

Das Rauschniveau $SN_j$ für die j-te harmonische Oberschwingung der doppelten Netzbetriebsfrequenz wird gebildet durch das Verhältnis des Betrags des Körperschallsignalanteils der j-ten harmonischen Oberschwingung zum Signalbetrag der Körperschallsignalanteile in der Rauschumgebung der j-ten harmonischen Oberschwingung.

Die Rauschumgebung wird vorteilhaft aus den spektralen Anteilen zwischen 15 Hz bis 35 Hz unterhalb und oberhalb der entsprechenden j-ten harmonischen Oberschwingung berechnet. Die Berechnung für jede harmonische Oberschwingung j erfolgt nach

$$SN_j = \frac{1}{3} \sum_{s=1}^{3} \left( \frac{|FFT(Ks_s)_{100j}|}{\sum_{i=15}^{35} \left( |FFT(Ks_s)_{100j-i}| + |FFT(Ks_s)_{100j+i}| \right)} \right)$$

wobei $Ks_s$ das Körperschallsignal der Sensoren s im Zeitbereich ist, und $|FFT(Ks_s)_{100j}|$ der Signalbetrag des Körperschallsignals bei der Frequenz 100*j Hz.

Die Summe im Nenner ergibt den Signalbetrag, welcher im angegebenen Frequenzspektrum, d.h. im Intervall [100*jHz-35Hz, 100*jHz-15Hz] sowie im Intervall [100*jHz+15Hz, 100*jHz + 35Hz] liegt. Die gewählten Werte von 15 Herz und 35 Hertz sind beispielhaft und können gemäß den Erfordernissen an einem individuellen Lichtbogenofen angepasst werden. Denkbar sind insbesondere auch 10 Hz und 40 Hz oder 10Hz und 30Hz anstatt der oben gewählten 15 Hz und 35 Hz.

Hieraus ergeben sich somit die einzelnen Rauschniveaus für die jeweilige j-te Oberschwingung. Diese einzelnen Rauschniveaus werden nun zu einem Signal-Rausch-Verhältnis SNR gewichtet aufsummiert, wobei der Wichtungsvektor g wählbar ist. Die Berechnung erfolgt somit gemäß

$$SNR = \sum_{j=1}^{6} g_j \cdot SN_j$$

.

Es zeigte sich als vorteilhaft, dass der Wichtungsvektor wie folgt gewählt wird: $\overline{g}$ = (0, 1/3, 1/3, 1/3, 0, 0). Mit einer derartigen Wichtung wird ein Mittelwert des Signal-Rausch-verhältnisses für Oberschwingungen für j= 2, 3, 4, d.h. bei 200 Hz, 300 Hz und 400 Hz, gebildet.

Anhand dieses Signals kann bereits ein möglichst optimaler Chargierzeitpunkt gut bestimmt werden.

Die Genauigkeit der Bestimmung des Chargierzeitpunkts kann jedoch weiter erhöht werden, indem zusätzlich ein Elektrodenstromsignal für die Bestimmung des Chargierzeitpunkts miteinbezogen wird. Im Ausführungsbeispiel wird diese Vorgehensweise erläutert. Es ist jedoch, wie bereits oben erwähnt, nicht zwingend erforderlich, derart vorzugehen.

Daher können in einer alternativen Variante zum Ausführungsbeispiel gemäß FIG 3 die Verfahrensschritte 203 und 204 auch entfallen.

Aufgrund der Verbesserung bei der Bestimmung des Chargierzeitpunkts wird jedoch nachfolgend das Einbeziehen eines Elektrodenstromanteils erläutert. Dies geschieht in den Verfahrensschritten 203 und 204.

Im Verfahrensschritt 203 wird nun ein Grundschwingungsanteil, nachfolgend auch Grundschwingungsgehalt genannt, des Elektrodenstromes für die Ermittlung des zweiten Signals mitberücksichtigt. Der Grundschwingungsanteil bzw. -gehalt ist derjenige Anteil des Elektrodenstroms, welcher durch die Netzbetriebsfrequenz zum Gesamtsignal beigetragen wird. Die Einbeziehung dieses Grundsignalanteils bzw. -gehalts führt zu größerer Prozesssicherheit, indem dieser ein Prüfkriterium für die Auswertung des Körperschalls darstellt.

Durch extreme Betriebsbedingungen mit Einfluss auf den gemessenen Körperschall könnte es in wenigen Ausnahmen zu einer fehlerhaften Bestimmung des Chargierzeitpunkts kommen. Dies kann durch die Einbeziehung des Grundschwingungsanteils bzw. -gehalts des Elektrodenstroms vermieden werden. So erfolgt bspw. eine Auslösung der Chargierung erst dann, wenn der Grundschwingungsanteil der Elektrodenströme aller Elektroden über einem vorgegebenen Schwellwert, etwa 0,9, liegt.

Zur Ermittlung des Grundschwingungsanteils der Elektrodenströme wird der im vorliegenden Beispiel der 50 Hz Anteil des Elektrodenstromes I für jede Elektrode k unter Verwendung der Fouriertransformation der Ströme berechnet und der Effektivwert $I_{eff,k}$ bestimmt:

$$GG = \frac{1}{3} \sum_{k=1}^{3} \frac{|FFT(I_k)_{50}|}{I_{eff,k}}$$

Im vorliegenden Fall läuft k von 1 bis 3, da der Lichtbogenofen drei Elektroden umfasst. GG bezeichnet den Grundschwingungsanteil bzw. -gehalt. $|FFT(I_k)_{50}|$ ist der Betrag des Signalbeitrags des Elektrodenstroms bei 50Hz. FFT steht auch hier wieder für Fast Fourier Transformation, welches als Mittel zur Bestimmung des Grundschwingungsanteils bzw. -gehalts eingesetzt werden kann.

In einem Verfahrensschritt 204 wird nun aus einer Kombination des ermittelten Signal-Rausch-Verhältnisses SNR und des Grundschwingungsgehalts das zweite Signal SKs ermittelt, welches zur Ermittlung des Chargierzeitpunkts herangezogen wird.

Dies geschieht, indem das ermittelte Signal-Rausch-Verhältnis und der Grundschwingungsgehalt in die nachfolgende Gleichung eingesetzt werden:

$$SKs = a \cdot (SNR - b) \cdot (GG - 0.9)$$

Der Faktor a wird vorzugsweise derart bestimmt, dass das zweite Signal SKs gegen 1 geht, wenn die Flachbadphase im Lichtbogenofen erreicht ist. Der Parameter b ist ein Offset-Wert, welcher individuell für den jeweiligen Lichtbogenofen zu ermitteln ist.

Das zweite Signal SKs ist nahe null in der Schrottphase und steigt stark in der Flüssigbadphase an. Dadurch ist es möglich, auch dieses heranzuziehen, um einen möglichst optimalen Chargierzeitpunkt zu bestimmen.

Analog zum Ausführungsbeispiel gemäß FIG 2 wird in einem Verfahrensschritt 205 geprüft, ob das zweite Signal einen vorgegebenen Schwellwert für eine vorgegebene Mindestdauer überschreitet. Hinsichtlich Schwellwert und Bestimmung der Zeitdauer gelten die Aussagen zu FIG 2 in gleicher Weise für FIG 3.

Wird der Schwellwert für eine vorgegebene Mindestzeitdauer durch das zweite Signal überschritten, so wird in einem Verfahrensschritt 206 ein Chargiersignal ausgegeben. Hierzu gelten die Ausführungen im Rahmen der Erläuterungen zu Verfahrensschritt 106 aus FIG 2.

Die Prüfung hinsichtlich der Beendigung des Verfahrens in eiem Verfahrensschritt 207 erfolgt ebenfalls analog zum Verfahrensschritt 107 der FIG 2.

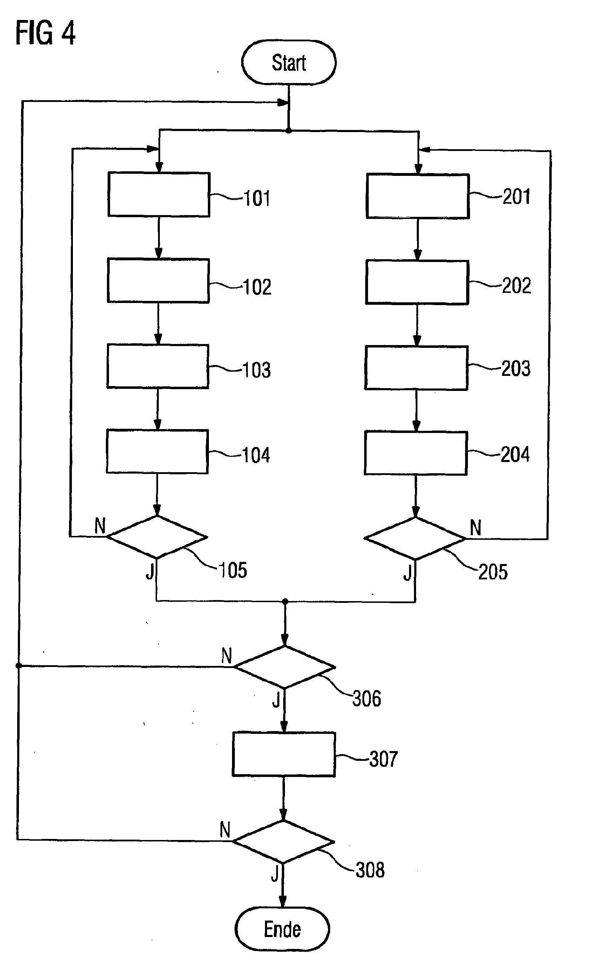

FIG 4 zeigt eine Kombination des Ausführungsbeispiels zu FIG 2 und zu FIG 3.

Hier wird parallel ein erstes Signal gemäß FIG 2 und zweites Signal gemäß FIG 3 ermittelt. Für die Ermittlung dieser Signale wird daher auf die Ausführungen zu FIG 2 und FIG 3 verwiesen.

In einem Verfahrensschritt 306 wird gemäß FIG 3 geprüft, ob das erste Signal als auch das zweite Signal jeweils für eine vorgegebene Mindestzeitdauer größer als der jeweilige Schwellwert ist. Ist dies nicht der Fall, ist keines der beiden Signale oder nur eines der beiden Signale für die vorgeschrieben Mindestzeitdauer größer als der jeweilige Schwellwert, so erfolgt keine Ausgabe eines Chargiersignals.

Alternativ kann auch ein Mittelwert aus dem ersten und dem zweiten Signal gebildet werden, und dieser einer Prüfung unterzogen werden im Hinblick auf einen Schwellwert und die Dauer der Überschreitung des Schwellwerts.

Sobald jedoch - je nach Ausführung - das entsprechende gemittelte Signal bzw. das erste und das zweite Signal das Prüfkriterium erfüllen, erfolgt in einem Verfahrensschritt 307 eine Ausgabe eines Chargiersignals.

Die Ausgabe des Chargiersignals kann erfolgen, indem direkt nach Vorliegen des Chargiersignals entsprechende Stellglieder von einer Steuer- und/oder Regeleinrichtung angesteuert werden, welche für eine Chargierung von Schrott erforderlich sind. Alternativ kann durch Mitteilung des Vorliegens eines optimalen Chargierzeitpunkts an Bedienpersonal eine Chargierung durch das Bedienpersonal initiiert werden.

Nachfolgend wird in einem Verfahrensschritt 308 abgefragt, ob das Verfahren beendet werden soll. Es gelten hierzu die entsprechenden Ausführungen zu FIG 2 analog.

## Patentansprüche

1. Verfahren zur Bestimmung eines Chargierzeitpunkts zum Chargieren, insbesondere Nach-Chargieren, von Schmelzgut (G), insbesondere Schrott, in einen Lichtbogenofen (1), wobei der Lichtbogenofen (1) wenigstens eine Elektrode (3a, 3b, 3c) zum Erhitzen von innerhalb des Lichtbogenofens (1) angeordnetem Schmelzgut (G) mittels eines Lichtbogens umfasst, **dadurch gekennzeichnet, dass** ein erstes Signal (S) zur Bestimmung eines Phasenzustands eines schmelzgutseitigen Lichtbogenfußpunkts anhand eines erfassten Elektrodenstroms ($I_k$) ermittelt wird, dass geprüft wird, ob das erste Signal (S) einen vorgegebenen Schwellwert für eine vorgegebene Mindestzeitdauer überschreitet, dass der Chargierzeitpunkt frühestens dann erreicht ist, wenn das erste Signal den Schwellwert für die vorgegebene Mindestzeitdauer überschreitet.

2. Verfahren nach Anspruch 1,
**dadurch gekennzeichnet, dass** für die Ermittlung des ersten Signals (S) eine S-Funktion verwendet wird.

3. Verfahren nach Anspruch 2,
**dadurch gekennzeichnet, dass** zur Ermittlung des ersten Signals (S) für die S-Funktion ein Verhältnis aus Elektrodenstrombeiträgen bei einem ganzzahligen Vielfachen des Doppelten einer Netzbetriebsfrequenz und Elektrodenstrombeiträgen herangezogen wird, welche zwischen ganzzahligen Vielfachen des Doppelten der Netzbetriebsfrequenz vorliegen.

4. Verfahren zur Bestimmung eines Chargierzeitpunkts zum Chargieren, insbesondere Nach-Chargieren, von Schmelzgut (G), insbesondere Schrott, in einen Lichtbogenofen (1), wobei der Lichtbogenofen wenigstens eine Elektrode (3a, 3b, 3c) zum Erhitzen von innerhalb des Lichtbogenofens (1) angeordnetem Schmelzgut (G) mittels eines Lichtbogens umfasst, wobei ein zweites Signal (SKs) zur Bestimmung eines an einer Begrenzung (2), insbesondere Ofenwand, des Lichtbogenofens (1) festgesetzten feststoffförmigen Schmelzgutteils mittels erfasster Körperschallwellen ermittelt wird, wobei geprüft wird, ob das zweite Signal (SKs) einen vorgegebenen Schwellwert für eine vorgegebene Mindestzeitdauer überschreitet, wobei der Chargierzeitpunkt frühestens dann erreicht ist, wenn das zweite Signal den Schwellwert für die vorgegebene Mindestzeitdauer überschreitet.

5. Verfahren nach Anspruch 4,
**dadurch gekennzeichnet, dass** zur Ermittlung des zweiten Signals (SKs) ein Signal-Rausch-Verhältnis (SNR) aus Körperschallsignalanteilen diskreter Frequenzen und aus Körperschallsignalanteilen für in einem vorgegebenen Intervall von der jeweiligen diskreten Frequenz abweichende Frequenzen gebildet wird.

**6.** Verfahren nach einem der Ansprüche 4 oder 5, **dadurch gekennzeichnet, dass** zur Ermittlung des zweiten Signals (SKs) zusätzlich ein Elektrodenstromsignalanteil bei einer Netzbetriebsfrequenz des Lichtbogenofens, insbesondere 50Hz oder 60Hz, herangezogen wird.

**7.** Verfahren nach Anspruch 6,
**dadurch gekennzeichnet, dass** das zweite Signal (SKs) mittels der Gleichung:

$$SKs = c*(SNR - d)*(GG - 0,9)$$

ermittelt wird, wobei

SNR: das Signal-Rausch-Verhältnis,
GG: der Elektrodenstromsignalanteil bei der Netzbetriebsfrequenz
c: ein Verstärkungsfaktor, und
d: ein Offset-Wert ist.

**8.** Verfahren zur Bestimmung eines Chargierzeitpunkts zum Chargieren, insbesondere Nach-Chargieren, von Schmelzgut (G), insbesondere Schrott, in einen Lichtbogenofen (1), wobei der Lichtbogenofen (1) wenigstens eine Elektrode (3a, 3b, 3c) zum Erhitzen von innerhalb des Lichtbogenofens (1) angeordnetem Schmelzgut (G) mittels eines Lichtbogens umfasst, wobei ein erstes Signal (S) zur Bestimmung eines Phasenzustands eines schmelzgutseitigen Lichtbogenfußpunkts anhand eines erfassten Elektrodenstroms ($I_k$) ermittelt wird, wobei ein zweites Signal (SKs) zur Bestimmung eines an einer Begrenzung (2), insbesondere Ofenwand, des Lichtbogenofens (1) festgesetzten feststoffförmigen Schmelzgutteils mittels erfasster Körperschallwellen ermittelt wird, wobei der Chargierzeitpunkt unter Verwendung des ersten und des zweiten Signals ermittelt wird, wobei aus dem ersten Signal (S) und dem zweiten Signal (SKs) ein gemitteltes Signal ermittelt wird, wobei geprüft wird, ob das gemittelte Signal einen vorgebbaren Schwellwert für eine vorgegebene Mindestzeitdauer überschreitet, wobei der Chargierzeitpunkt frühestens dann erreicht ist, wenn das gemittelte Signal für eine vorgegebene Mindestdauer oberhalb des Schwellwerts liegt.

**9.** Verfahren zur Bestimmung eines Chargierzeitpunkts zum Chargieren, insbesondere Nach-Chargieren, von Schmelzgut (G), insbesondere Schrott, in einen Lichtbogenofen (1), wobei der Lichtbogenofen (1) wenigstens eine Elektrode (3a, 3b, 3c) zum Erhitzen von innerhalb des Lichtbogenofens (1) angeordnetem Schmelzgut (G) mittels eines Lichtbogens umfasst, wobei ein erstes Signal (S) zur Bestimmung eines Phasenzustands eines schmelzgutseitigen Lichtbogenfußpunkts anhand eines erfassten Elektrodenstroms ($I_k$) ermittelt wird, wobei ein zweites Signal (SKs) zur Bestimmung eines an einer Begrenzung (2), insbesondere Ofenwand, des Lichtbogenofens (1) festgesetzten feststoffförmigen Schmelzgutteils mittels erfasster Körperschallwellen ermittelt wird, wobei der Chargierzeitpunkt unter Verwendung des ersten und des zweiten Signals ermittelt wird, wobei geprüft wird, ob das erste Signal (S) einen vorgegebenen Schwellwert für eine vorgegebene Mindestzeitdauer überschreitet, wobei geprüft wird, ob das zweite Signal (SKs) einen vorgegebenen Schwellwert für eine vorgegebene Mindestzeitdauer überschreitet, wobei der Chargierzeitpunkt frühestens dann erreicht ist, wenn das erste und das zweite Signal gleichzeitig jeweils für eine vorgegebene Mindestdauer über dem jeweils zugehörigen Schwellwert liegen.

**10.** Verfahren nach einem der vorhergehenden Ansprüche, **dadurch gekennzeichnet, dass** der Lichtbogenofen (1) mehr als eine Elektrode (3a, 3b, 3c), insbesondere drei Elektroden, und/oder mehr als einen Körperschallsensor (4a, 4b, 4c), insbesondere drei Körperschallsensoren, umfasst, wobei der Chargierzeitpunkt gemäß einem der vorhergehenden Ansprüche unter Berücksichtigung der erfassten Elektrodenströme ($I_k$) aller Elektroden (3a, 3b, 3c) und/oder unter Berücksichtigung der erfassten Körperschallschwingungen aller Körperschallsensoren (4a, 4b, 4c) bestimmt wird.

**11.** Signalverarbeitungseinrichtung (8) für einen Lichtbogenofen, mit einem maschinenlesbaren Programmcode (21), welcher Steuerbefehle aufweist, die die Signalverarbeitungseinrichtung (8) zur Durchführung eines Verfahrens nach einem der vorhergehenden Ansprüche veranlassen.

**12.** Maschinenlesbarer Programmcode (21) für eine Signalverarbeitungseinrichtung (8) für einen Lichtbogenofen (1), wobei der Programmcode (21) Steuerbefehle aufweist, die die Signalverarbeitungseinrichtung (8) zur Durchführung des Verfahrens nach einem der Ansprüche 1 bis 10 veranlassen.

13. Speichermedium (22) mit einem darauf gespeicherten maschinenlesbaren Programmcode (21) gemäß Anspruch 12.

14. Lichtbogenofen (1) mit wenigstens einer Elektrode (3a, 3b, 3c), mit einer Elektrodenstromerfassungseinrichtung (13a, 13b, 13c) zur Erfassung eines Elektrodenstroms ($I_k$) der wenigsten einen Elektrode (3a, 3b, 3c), mit wenigstens einem Körperschallsensor (4a, 4b, 4c) zur Erfassung von Körperschall-Schwingungen einer Begrenzung (2), insbesondere einer Ofenwand (2), des Lichtbogenofens (1), und mit einer Signalverarbeitungseinrichtung nach Anspruch 12, wobei die Elektrodenstromerfassungseinrichtung (13a, 13b, 13c) und die Körperschallsensoren (4a, 4b, 4c) mit der Signalverarbeitungseinrichtung wirkverbunden sind.

15. Lichtbogenofen nach Anspruch 14,
**dadurch gekennzeichnet, dass** die Signalverarbeitungseinrichtung (8) mit einer Steuer- und/oder Regeleinrichtung (9) wirkverbunden ist, welche mit einer Chargiereinrichtung (10) wirkverbunden ist, und die Chargierung von Schmelzgut (G) mittels der Steuer- und/oder Regeleinrichtung (9) steuerbar und/oder regelbar ist.

## Claims

1. Method for determining a charging time for charging, especially recharging, an electric arc furnace (1) with material to be melted (G), especially scrap, wherein the electric arc furnace (1) has at least one electrode (3a, 3b, 3c) for heating material to be melted (G) that is arranged within the electric arc furnace (1) by means of an electric arc, **characterised in that** a first signal (S), for determining a phase state of an arc root point on the side of the material to be melted is established on the basis of a detected electrode current ($I_k$), that a check is made as to whether a first signal (S) exceeds a predetermined threshold value for a predetermined minimum duration, that the charging time is reached at the earliest when the first signal exceeds the threshold value for the predetermined minimum duration.

2. Method according to claim 1,
**characterised in that** an S function is used to establish the first signal (S).

3. Method according to claim 2,
**characterised in that,** to establish the first signal (S) for the S function, a ratio of electrode current contributions for a whole-number multiple of double the mains operating frequency and electrode current contributions is included, which are present between whole-number multiples of double the mains operating frequency.

4. Method for determining a charging time for charging, especially recharging, an electric arc furnace (1) with material to be melted (G), especially scrap, wherein the electric arc furnace (1) has at least one electrode (3a, 3b, 3c) for heating material to be melted (G) that is arranged within the electric arc furnace (1) by means of an electric arc, wherein a second signal (SKs), for defining a part of the solid-type material to be melted adhering to a delimitation (2), especially furnace wall, of the electric arc furnace (1) is determined with detected structure-borne sound waves, wherein a check is made as to whether the second signal (SKs) exceeds a predetermined threshold value for a predetermined minimum duration, wherein the charging time is reached at the earliest when the second signal exceeds the threshold value for the predetermined minimum duration.

5. Method according to claim 4,
**characterised in that**, to establish the second signal (SKs), a signal-to-noise ratio (SNR) from structure-borne sound signal components of discrete frequencies and from structure-borne sound signal components for frequencies deviating in a predetermined interval from the respective discrete frequency is formed.

6. Method according to one of claims 4 or 5,
**characterised in that**, to establish the second signal (SKs), an electrode current signal component at a mains operating frequency of the electric arc furnace, especially 50Hz or 60Hz, is included.

7. Method according to claim 6,
**characterised in tha**t the second signal (SKs) is established by means of the equation:

$$SKs = c*(SNR - d)*(GG - 0.9),$$

wherein

SNR: is the signal-to-noise ratio,
GG: is the electrode current component at the mains operating frequency
c: is a gain factor and
d: is an offset value.

8. Method for determining a charging time for charging, especially recharging, an electric arc furnace (1) with material to be melted (G), especially scrap, wherein the electric arc furnace (1) has at least one electrode (3a, 3b, 3c) for heating material to be melted (G) that is arranged within the electric arc furnace (1) by means of an electric arc, wherein a first signal (S) for determining a phase state of an electric arc root point on the side of the material to be melted is established on the basis of a detected electrode current ($I_k$), wherein a second signal (SKs), for determining a solid-type part of the material to be melted adhering to a delimitation (2), especially furnace wall, of the electric arc furnace (1) is established by means of detected structure-borne sound waves, wherein the charging time is established using the first and the second signal, wherein an average signal is established from the first signal (S) and the second signal (SKs), wherein a check is made as to whether the average signal exceeds a predeterminable threshold value for a predetermined minimum duration, wherein the charging time is then reached at the earliest when the average signal lies above the threshold value for a predetermined minimum duration.

9. Method for determining a charging time for charging, especially recharging, an electric arc furnace (1) with material to be melted (G), especially scrap, wherein the electric arc furnace (1) has at least one electrode (3a, 3b, 3c) for heating material to be melted (G) that is arranged within the electric arc furnace (1) by means of an electric arc, wherein a first signal (S) for determining a phase state of an electric arc root point on the side of the material to be melted is established on the basis of a detected electrode current ($I_k$), wherein a second signal (SKs), for determining a solid-type part of the material to be melted adhering to a delimitation (2), especially furnace wall, of the electric arc furnace (1) is established by means of detected structure-borne sound waves, wherein the charging time is established using the first and the second signal, wherein a check is made as to whether the first signal (S) exceeds a predetermined threshold value for a predetermined minimum duration, wherein a check is made as to whether the second signal (SKs) exceeds a predetermined threshold value for a predetermined minimum duration, wherein the charging time is then reached at the earliest when the first and the second signal simultaneously each lie above the respective associated threshold value for a predetermined minimum duration.

10. Method according to one of the preceding claims, **characterised in that** the electric arc furnace (1) comprises more than one electrode (3a, 3b, 3c), especially three electrodes, and/or more than one structure-borne sound sensor (4a, 4b, 4c), especially three structure-borne sound sensors, wherein the charging time is determined in accordance with one of the preceding claims, taking into account the detected electrode currents ($I_k$) of all electrodes (3a, 3b, 3c) and/or taking into account the detected structure-borne sound vibrations of all structure-borne sound sensors (4a, 4b, 4c).

11. Signal processing device (8) for an electric arc furnace, with a machine-readable program code (21), which comprises control commands which cause the signal processing device to carry out a method according to one of the preceding claims.

12. Machine-readable program code (21) for a signal processing device (8) for an electric arc furnace (1), wherein the program code (21) comprises control commands which cause the signal processing device (8) to carry out the method according to one of claims 1 to 10.

13. Storage medium (22) with a machine-readable program code (21) stored thereon, according to claim 12.

14. Electric arc furnace (1) with a least one electrode (3a, 3b, 3c), with an electrode current detection device (13a, 13b, 13c) for detecting an electrode current ($I_k$) of the at least one electrode (3a, 3b, 3c), with a least one structure-borne sound sensor (4a, 4b, 4c) for detecting structure-borne sound vibrations of a delimitation (2), especially of the furnace wall (2), of the electric arc furnace (1), and with a signal processing device according to claim 12, wherein the electrode current detection device (13a, 13b, 13c) and the structure-borne sound sensors (4a, 4b, 4c) are actively connected to the signal processing device.

15. Electric arc furnace according to claim 14, **characterised in that** the signal processing device (8) is actively connected to an open-loop and/or closed-loop control device (9) which is actively connected to a charging device (10), and the charging of material to be melted (G) is able to be controlled and/or regulated by the open-loop and/or closed-loop control device (9).

**Revendications**

1.  Procédé de détermination d'un instant de chargement pour le chargement, notamment le rechargement, de produit ( G ) à fondre, notamment de riblon, dans un four ( 1 ) à arc électrique, le four ( 1 ) à arc électrique comprenant au moins une électrode ( 3a, 3b, 3c ) pour réchauffer au moyen d'un four électrique du produit ( G ) à fondre mis à l'intérieur du four ( 1 ) à arc électrique,
    **caractérisé en ce que** l'on détermine, au moyen de la détection d'un courant ( $I_K$ ) d'électrode, un premier signal ( S ) de définition d'un état de phase d'un point de pied du four électrique du côté du produit à fondre, **en ce que** l'on contrôle si le premier signal ( S ) dépasse une valeur de seuil donnée à l'avance, pour une durée minimum donnée à l'avance, **en ce que** l'instant de chargement est atteint au plus tôt, lorsque le premier signal dépasse la valeur de seuil de la durée minimum donnée à l'avance.

2.  Procédé suivant la revendication 1,
    **caractérisé en ce que** l'on utilise une fonction S pour la détermination du premier signal ( S ).

3.  Procédé suivant la revendication 2,
    **caractérisé en ce que**, pour déterminer le premier signal ( S ), on tire parti, pour la fonction ( S ), d'un rapport des contributions de courant d'électrode, pour un multiple en nombre entier du double d'une fréquence de fonctionnement du secteur et des contributions du courant d'électrode, qui se trouve entre des multiples en nombre entier du double de la fréquence de fonctionnement du secteur.

4.  Procédé de détermination d'un instant de chargement pour le chargement, notamment le rechargement, de produit ( G ) à fondre, notamment de riblon, dans un four ( 1 ) à arc électrique, le four ( 1 ) à arc électrique comprenant au moins une électrode ( 3a, 3b, 3c ) pour réchauffer, au moyen d'un four à arc électrique, du produit ( G ) à fondre mis à l'intérieur du four ( 1 ) à arc électrique, dans lequel on détermine, au moyen d'une détection d'onde de bruit de corps, un deuxième signal ( SKs ), pour la définition d'une partie du produit à fondre sous forme solide, fixée à une démarcation ( 2 ), notamment à une paroi, du four ( 1 ) à arc électrique, dans lequel on contrôle si le deuxième signal ( SKs ) dépasse une valeur de seuil donnée à l'avance d'une durée minimum donnée à l'avance, l'instant de chargement étant atteint au plus tôt lorsque le deuxième signal dépasse la valeur de seuil de la durée minimum donnée à l'avance.

5.  Procédé suivant la revendication 4,
    **caractérisé en ce que**, pour déterminer le deuxième signal ( SKs ), on forme un rapport ( SNR ) signal-bruit de proportions du signal de bruit de corps de fréquences discrètes et de proportions du signal de bruit de corps, pour des fréquences s'écartant dans un intervalle donné à l'avance de la fréquence discrète respective.

6.  Procédé suivant l'une des revendications 4 ou 5,
    **caractérisé en ce que**, pour la détermination du deuxième signal ( SKs ), on tire parti en outre d'une proportion du signal de courant d'électrode à une fréquence de fonctionnement du secteur du four à arc électrique, notamment de 50Hz ou de 60Hz.

7.  Procédé suivant la revendication 6,
    **caractérisé en ce que** l'on détermine le deuxième signal ( SKs ) au moyen de l'équation :

$$SKs = c* ( SNR - d ) * ( GG - 0,9 ),$$

dans laquelle :

SNR : est le rapport signal-bruit,
GG : est la proportion du signal de courant d'électrode à la fréquence de fonctionnement du secteur,
c : est un facteur d'amplification et
d : est une valeur de décalage.

8.  Procédé de détermination d'un instant de chargement pour le chargement, notamment le rechargement, de produit ( G ) à fondre, notamment de riblon, dans un four ( 1 ) à arc électrique, le four ( 1 ) à arc électrique comprenant au moins une électrode ( 3a, 3b, 3c ) pour réchauffer, au moyen d'un four électrique, du produit ( G ) à fondre mis à l'intérieur du four ( 1 ) à arc électrique au moyen d'un four électrique, dans lequel on détermine, au moyen d'une détection d'un courant ( $I_k$ ) d'électrode, un premier signal ( S ) de définition d'un état de phase d'un point de pied du four électrique du côté du produit à fondre, un deuxième signal ( SKs ) étant, pour la détermination d'une partie du produit à fondre sous forme de matière solide, fixé à une démarcation ( 2 ), notamment à une paroi du four ( 1 ) à arc électrique, déterminé au moyen de la détection d'ondes de bruit de corps, l'instant de chargement étant déterminé en utilisant le premier et le deuxième signal, dans lequel on détermine un signal moyen, à partir du premier signal ( S ) et du deuxième signal ( SKs ), dans lequel on contrôle si le signal moyen dépasse une valeur de seuil pouvant être donnée à l'avance d'une durée minimum donnée à l'avance, l'instant de chargement étant atteint au plus tôt lorsque le signal moyen d'une durée minimum donnée à l'avance est au dessus de la valeur de seuil.

9.  Procédé de détermination d'un instant de chargement pour le chargement, notamment le rechargement, de produit ( G ) à fondre, notamment de riblon, dans un four ( 1 ) à arc électrique, le four ( 1 ) à arc électrique comprenant au moins une électrode ( 3a, 3b, 3c ) pour réchauffer, au moyen d'un four électrique, du produit ( G ) à fondre mis à l'intérieur du four ( 1 ) à arc électrique, dans lequel on détermine, au moyen d'une détection d'un courant ( $I_k$ ) d'électrode, un premier signal ( S ) de définition d'un état de phase d'un point de pied du four à arc électrique du côté du produit à fondre, dans lequel on détermine, au moyen d'une détection d'ondes de bruit de corps, un deuxième signal ( SKs ) de définition d'une partie du produit à fondre sous forme solide, fixé à une démarcation ( 2 ), notamment à une paroi du four ( 1 ) à arc électrique, dans lequel on détermine l'instant de chargement, en utilisant le premier et le deuxième signal, dans lequel on contrôle si le premier signal ( S ) dépasse une valeur de seuil donnée à l'avance d'une durée minimum donnée à l'avance, dans lequel on contrôle si le deuxième signal ( SKs ) dépasse une valeur de seuil donnée à l'avance d'une durée minimum donnée à l'avance, dans lequel l'instant de chargement est atteint au plus tôt lorsque le premier et le deuxième signal sont en même temps respectivement, pour une durée minimum donnée à l'avance, au-dessus de la valeur de seuil qui leur est associée respectivement.

10. Procédé suivant l'une des revendications précédentes, **caractérisé en ce que** le four ( 1 ) à arc électrique comprend plus d'une électrode ( 3a, 3b, 3c ), notamment trois électrodes, et/ou plus d'un capteur ( 4a, 4b, 4c ) de bruit de corps, notamment trois capteurs de bruit de corps, l'instant de chargement étant défini suivant l'une des revendications précédentes, en tenant compte des courants ( $I_k$ ) d'électrode détectés de toutes les électrodes ( 3a, 3b, 3c ) et/ou en tenant compte des oscillations de bruit de corps détectées de tous les capteurs ( 4a, 4b, 4c ) de bruit de corps.

11. Dispositif ( 8 ) de traitement du signal pour un four à arc électrique, comprenant un code ( 21 ) de programme, qui peut être exploité par une machine et qui a des instructions de commande, qui font que le dispositif ( 8 ) de traitement du signal effectue un procédé suivant l'une des revendications précédentes.

12. Code ( 21 ) de programme pouvant être exploité par une machine pour un dispositif ( 8 ) de traitement du signal pour un four ( 1 ) à arc électrique, dans lequel le code ( 21 ) de programme a des instructions de commande, qui font que le dispositif ( 8 ) de traitement du signal effectue le procédé suivant l'une des revendications 1 à 10.

13. Support ( 22 ) de mémoire sur lequel est mémorisé un code ( 21 ) de programme pouvant être exploité par une machine suivant la revendication 12.

14. Four ( 1 ) à arc électrique ayant au moins une électrode ( 3a, 3b, 3c ), un dispositif ( 13a, 13b, 13c ) de détection d'un courant d'électrode pour la détection d'un courant ( $I_k$ ) d'électrode de la au moins une électrode ( 3a, 3b, 3c ), au moins un capteur ( 4a, 4b, 4c ) de bruit de corps pour la détection d'oscillations de bruit de corps d'une démarcation ( 2 ), notamment d'une paroi ( 2 ) du four ( 1 ) à arc électrique, et un dispositif de traitement du signal suivant la revendication 12, dans lequel le dispositif ( 13a, 13b, 13c ) de détection du courant d'une électrode et les capteurs ( 4a, 4b, 4c ) de bruit de corps sont reliés en action au dispositif de traitement du signal.

15. Four à arc électrique suivant la revendication 14, **caractérisé en ce que** le dispositif ( 8 ) de traitement du signal est relié en action à un dispositif ( 9 ) de commande et/ou de régulation, qui est relié en action à un dispositif ( 10 ) de chargement, et le chargement de produit ( G ) à fondre peut être commandé et/ou régulé au moyen du dispositif ( 9 ) de commande et/ou de régulation.

FIG 1

EP 2 558 602 B1

# FIG 2

# FIG 3

```
                    ( Start )
                        |
                        v
        +-------->  +---------+ —201
        |           +---------+
        |               |
        |               v
        |           +---------+ —202
        |           +---------+
        |               |
        |               v
        |           +---------+ —203
        |           +---------+
        |               |
        |               v
        |           +---------+ —204
        |           +---------+
        |               |
        |      N        v
        +---------<  205 >
        |               | J
        |               v
        |           +---------+ —206
        |           +---------+
        |               |
        |      N        v
        +---------<  207 >
                        | J
                        v
                    ( Ende )
```

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009095396 A
- WO 2009095292 A1

- WO 2007009924 A1
- WO 2009095396 A1


**In der Beschreibung aufgeführte Nicht-Patentliteratur**

- **NYSSEN, P. et al.** Innovative visualisation technique at the electric arc furnace. *Revue de Metallurgie,* 2006, vol. 103 (9), 369-373
- **KÖHLE, S.** Rechnereinsatz zur Steuerung von Lichtbogenöfen. *Stahl u. Eisen,* 1980, vol. 100 (10), 522-528

- **NYSSEN, P. ; COLIN, R. ; JUNQUE, J.-L. ; KNOOPS, S.** Application of a dynamic metallurgical model tot he alectric arc furnace. *Revue de Metallurgie,* 2004, vol. 101 (4), 317-326
- **HIGGS, R.W.** Sonic Signature Analysis for Arc Furnace Diagnostics and Control. *Proceedings IEEE Ultrasonics Symposium,* 1974